# EUROPÄISCHE PATENTANMELDUNG

(11) **EP 1 818 546 A2**
(43) Veröffentlichungstag der Anmeldung: **15.08.2007**
(21) Anmeldenummer: 07001660.5
(22) Anmeldetag: 25.01.2007
(51) Int. Cl.: F15B 15/28, F16D 25/12

(54) **Vorrichtung zum Erfassen der Stellung eines hydraulischen Kolben-Zylinder-Systems**

(30) Priorität: 11.02.2006 DE 102006006354
(71) Anmelder: LuK Lamellen und Kupplungsbau Beteiligungs KG, 77813 Bühl (DE)
(72) Erfinder: Staudinger, Martin, 76275 Ettlingen (DE); Dreher, Felix, 77815 Bühl (DE)

(57) **Zusammenfassung**

Vorrichtung zum Erfassen der Stellung eines hydraulischen Kolben-Zylinder-Systems wobei das hydraulische Kolben-Zylinder-System mit einem Stellungserfassungsmittel, umfassend einen Magneten und einen Hallsensor, verbunden ist und die Verbindung zwischen dem hydraulische Kolben-Zylinder-System und dem Stellungserfassungsmittel einen Hebel beinhaltet.

## Beschreibung

Die vorliegende Erfindung befasst sich mit einer Vorrichtung zur Erfassung der Stellung eines hydraulischen Kolben-Zylinder-Systems, wobei das hydraulische Kolben-Zylinder-System mit einem Stellungserfassungsmittel, das einen Magneten und einen Hallsensor umfasst, verbunden ist.

Solche Vorrichtungen sind allgemein bekannt. So wird im Stand der Technik die relative Position eines Kolbens zu einem Zylinder durch einen in der Nähe des Kolbens angeordneten Hallsensor erfasst. Dieser Hallsensor misst das Magnetfeld eines an dem Kolben befestigten Magneten. Da das Feld des Magneten am Ort des Hallsensors mit der Entfernung des Hallsensors vom Magneten abnimmt, kann aus dem Wert des Magnetfeldes am Ort des Hallsensors die Position des Magneten relativ zu dem Hallsensor und somit die Entfernung des Kolbens relativ zu dem Hallsensor berechnet werden. Wenn nun der Hallsensor fest relativ dem Zylinder angeordnet ist, so kann aus der relativen Entfernung zwischen dem Kolben und dem Hallsensor die relative Entfernung des Kolbens vom Zylinder und somit die Stellung des Kolben-Zylindersystems ermittelt werden.

Diese Vorrichtungen sind zwar kostengünstig und lassen sich in einem beschränkten Bauraum unterbringen, jedoch weist sie eine Reihe Nachteile auf. So lässt sich mit einer solchen Vorrichtung nur ein beschränkter Weg von ca. 5 mm erfassen. Soll jedoch die Stellung eines Zylinder-Kolben-Systems erfasst werden, dessen Kolben mehr als 5 mm relativ zum Zylinder bewegt werden kann, so muss auf andere Lösungen zurückgegriffen werden.

Auch ist eine solche Vorrichtung nur bedingt im Bereich der KFZ-Technik verwendbar. Soll eine solche Vorrichtung in Kraftfahrzeugbereich verwendet werden, so muss sie über einen großen Temperaturbereich von ca. -40 °C bis 150°C hinweg zuverlässig funktionieren. Das Stellungserfassungsmittel aus dem Stand der Technik, umfassend ein Magneten und einen Hallsensor, weist jedoch einen beträchtlichen Messfehler über den vorgenannten Temperaturbereich auf. Aus diesem Grund kann ein solches Stellungserfassungsmittel keine zuverlässigen Daten liefern, die im Weiteren einer Steuerung oder Überprüfung des Kolben-Zylinder-Systems zugrunde gelegt werden können.

Außerdem sollte die Erfassung der Stellung des Zylinder-Kolben-Systems robust sein um mögliche Ausfälle der Stellungserfassung zu verhindern. Fällt jedoch in der oben vorgestellten Vorrichtung aus dem Stand der Technik der Hallsensor aus, so ist keine Erfassung der Stellung des Kolben-Zylinder-Systems mehr möglich und das Kolben-Zylinder-System kann evtl. nicht mehr zuverlässig gesteuert oder kontrolliert werden.

Die Aufgabe der vorliegenden Erfindung besteht darin zumindest einige der Nachteile der Vorrichtung aus dem Stand der Technik zumindest teilweise zu lindern.

Diese Aufgabe wird gelöst durch eine Vorrichtung mit den Merkmalen des unabhängigen Anspruchs.

Die erfindungsgemäße Vorrichtung zum Erfassen der Stellung eines hydraulischen Kolben-Zylinder-Systems, wobei das hydraulische Kolben-Zylinder-System mit einem Stellungserfassungsmittel, umfassend einen Magneten und einen Hallsensor, verbunden ist, zeichnet sich dadurch aus, dass die Verbindung zwischen dem hydraulische Kolben-Zylinder-System und dem Stellungserfassungsmittel einen Hebel beinhaltet.

Dabei kann sowohl der Kolben als auch der Zylinder des Kolben-Zylinder-System mit dem Hebel verbunden sein, so dass bei einer Bewegung des Kolbens relativ zu dem Zylinder der Hebel mitbewegt wird. Dabei kann der Hebel sowohl direkt mit dem Kolben-Zylinder-System als auch indirekt, über weitere Bauteile, wie z.B. einen Stößel mit dem Kolben-Zylinder-System verbunden sein. Es ist für die vorliegende Erfindung ausreichend, dass sich mit der Änderung der Stellung des Kolben-Zylinder-Systems, also mit der Änderung der relativen Position des Kolbens gegenüber dem Zylinder auch die Position des Hebels ändert. Der Hebel ist wiederum direkt oder indirekt mit mindestens einem Magneten bzw. mit mindestens einem Hallsensor verbunden. Wird nun der Kolben relativ zu dem Zylinder bewegt, so bewegt sich auch der Hebel und damit der Magnet relativ zu dem Hallsensor. Der Hebel kann nun so angeordnet werden, dass die Entfernung, die der Kolben relativ zu dem Zylinder zurücklegt, größer ist als die daraus resultierende Entfernungsänderung zwischen dem Hallsensor und dem Magneten. So kann zum Beispiel der Kolben an einer Stelle an dem Hebel angreifen, die weiter vom Drehpunkt des Hebels entfernt ist als die Stelle an der der Magnet mit dem Hebel verbunden ist. Durch diese Anordnung des Hebels kann auch die Stellung eines Zylinder-Kolben-Systems dessen Zylinder relativ zum Kolben eine größere Wegstrecke, z.B. mehr als 5 mm, zurücklegen kann, zuverlässig erfasst werden. Es wird also möglich eine größere Vielfalt von Zylinder-Kolben-Systemen mittels Hallsensoren überwachen zu können und so in mehr Fällen als im Stand der Technik auf diese kostengünstige und raumsparende Alternative der Stellungsermittlung mittels Hallsensoren zurückgreifen zu können.

Bevorzugt umfasst das Stellungserfassungsmittel mindestens zwei Hallsensoren. Diese Sensoren können so angeordnet werden, dass beiden Hallsensoren das Magnetfeld des Magneten zumindest zeitweise erfassen können. So kann, falls einer der Hallsensoren fehlerhaft ist, der andere weiterhin das Magnetfeld des Magneten erfassen und so die Stellung des Zylinder-Kolben-Systems ermitteln. Dadurch wird eine robustere Stellungsermittlung des Zylinder-Kolben-Systems ermöglicht. Auch können die Hallsensoren in verschiedenen Positionen um den Magneten herum angeordnet werden. Durch die Unterschiede in der Position ergeben sich in der Regel auch Unterschiede in der durch die Hallsensoren ermittelten Magnetfeldstärke. So nimmt in dem Fall, wenn sich der Magnet zwischen zwei Hallsensoren befindet und sich auf den ersten Hallsensor zubewegt, die Höhe des Magnetfeldes am Ort des ersten Hallsensors zu, während die Höhe des Magnetfeldes am Ort des zweiten Hallsensors abnimmt. Durch den Vergleich der verschiedenen Hallsensoren kann dann damit der Einfluss der Temperatur auf die Hallsensorsignale errechnet werden und so das Stellungserfassungsmittel über einen großen Temperaturbereich verwendet werden. Um einen solchen Vergleich anstellen zu können, muss der Magnet sich nicht zwischen den beiden Magneten befinden, sondern es sollte nur ausgeschlossen werden, dass beide Hallsensoren über die gesamte mögliche Wegstrecke dasselbe Signal messen. Die oben genannten Anordnungen können sowohl mit zwei, aber auch mit drei und mehr Hallsensoren realisiert werden. Auch kann aus Gründen der Messgenauigkeit oder Zuverlässigkeit das Stellungserfassungsmittel mit mehreren Magneten ausgestattet werden.

Der vorgenannte Hebel kann dabei einen Arm aufweisen, also ein einarmiger Hebel sein. Ein solcher Hebel hat eine geringe Ausdehnung, da sowohl das Kolben-Zylinder-System, als auch der Magnet an demselben Arm des Hebels angreifen. So kann eine solche Vorrichtung sehr raumsparend konstruiert werden und leicht in kleinste Bauteile oder kleine Öffnungen integriert werden. Auch sind die Verwindungen, die sich durch die Länge des Hebels ergeben bei einem einarmigen Hebel in der Regel klein, so dass die Verwendung eines einarmigen Hebels die Meßfehler durch die Übertragung der Bewegung minimiert.

Der vorgenannte Hebel kann auch zwei Arme aufweisen, also ein zweiarmiger Hebel sein. Ein solcher zweiarmiger Hebel erlaubt es das Stellungserfassungsmittel auf die Seite des Hebels zu platzieren, die vom Zylinder-Kolben-System aus jenseits des Drehpunktes des Hebels liegt. So kann das Stellungserfassungsmittel entfernt vom Zylinder-Kolben-System angebracht werden und so sowohl dem Zylinder-Kolben-System als auch dem Stellungserfassungsmittel ein ausreichender Bauraum zur Verfügung gestellt werden.

Bevorzugt ist das Kolben-Zylinder-System Teil eines Ventilsystems einer Hydraulik. Dabei gibt die Lage des Kolbens im Zylinder an, in welchem Zustand sich das Ventil befindet. Das Ventil kann dabei zum Beispiel den Zustand "geschlossen" oder verschiedene Öffnungsgrade annehmen. Somit kann über die Ermittlung der Stellung des Kolbens relativ zum Zylinder durch das oben bezeichnete Stellungserfassungsmittel der Öffnungsgrad des Ventils überwacht werden. Dies ist sowohl kostengünstig, zuverlässig und auch temperaturstabil.

Das Ventilsystem kann dabei einer automatisch gesteuerten Kupplung beigeordnet sein. Eine solche Kupplung kann über ein Hydrauliksystem gesteuert werden, welches wiederum Hydraulikventile beinhaltet. Durch die Verwendung eines Hebels zwischen dem Ventilsystem und dem Stellungserfassungsmittel kann eine größere Freiheit in der Auswahl der geeigneten Ventile erreicht werden, da auch Ventile verwendet werden können, deren Kolben einen großen Weg relativ zu dem entsprechenden Zylinder zurücklegen können. Dieser Weg kann durch den Hebel an das Stellungserfassungsmittel weitergegeben werden und dabei in einen kleineren Weg umgesetzt werden. Somit ist es möglich auch bei Ventilen, die einen größeren Weg zurücklegen können, die Stellung zuverlässig zu ermitteln.

Das Ventilsystem wird bevorzugt einer Doppelkupplungseinrichtung beigeordnet sein. Dabei kann es auch ein Teil der Doppelkupplungseinrichtung sein. Solche Doppelkupplungseinrichtungen werden oftmals durch hydraulische Ventile gesteuert. Da die Stellungserfassungsmittel hier einerseits besonderen Temperaturschwankungen ausgeliefert sind, andererseits auch sehr zuverlässig funktionieren müssen, um eine funktionierende Steuerung der Doppelkupplung zu gewährleisten ist es besonders bevorzugt hier ein Stellungserfassungsmittel zu verwenden, das einen Magneten und ein Hallsensor umfasst. Da aber auch solche Ventile oft einen Hub aufweisen, der relativ groß z.B. größer als 5 mm ist, wird die Verwendung des Hallsensorstellungserfassungsmittels erst durch den Hebel der vorliegenden Erfindung möglich.

Das hydraulische Kolben-Zylinder-System kann ein Betätigungselement sein. Besonders bei Betätigungselementen ist es oftmals erwünscht, dass der Betätigungsweg verschieden dimensioniert werden kann. Durch die Verwendung des Hebels zur Umsetzung des Betätigungsweges in einen für das Stellungsermittlungsmittel erfassbaren Weg können nun Betätigungselemente mit verschieden großen Betätigungswegen, insbesondere auch solche mit großen Betätigungswegen mittels Hallsensoren überwacht werden. Dies führt zu einem größeren Anwendungsbereich für Hallsensorstellungserfassungsmittel.

Das Kolben-Zylindersystem kann ein Schaltzylinder einer hydraulischen Gangschalteinheit sein. Bei einer hydraulischen Gangschalteinheit werden die Gänge eines Schaltgetriebes automatisch bzw. manuell über eine Hydraulik geschalten. Dabei werden mit dem Schaltzylinder die verschiedenen Gänge eingelegt, also die verschiedenen Übersetzungen betätigt. Auch solche Schaltzylinder weisen verschiedene unter Umständen vom Getriebe abhängige Betätigungswege auf. Durch die Übertragung dieses Betätigungsweges mittels Hebel an eine oder mehrere Stellungserfassungsmittel kann auch die Stellung eines Schaltzylinder, der einen großen Betätigungsweg aufweist mittels Hallsensoren ermittelt werden und so eine temperaturunempfindliche, kleine und robuste Stellungsermittlung verwendet werden.

Bevorzugt kann auch die Stellung von Betätigungselementen, die Teil eines stufenlosen Getriebes sind oder diesem zugeordnet sind durch ein oder mehrere Hallsensorstellungserfassungsmittel erfasst werden, indem das Betätigungselement mittels Hebels mit dem einen oder den mehreren Stellungserfassungsmitteln verbunden ist.

Die Erfindung wird im Folgenden anhand von einer schematischen Zeichnung beispielsweise und mit weiteren Einzelheiten erläutert.

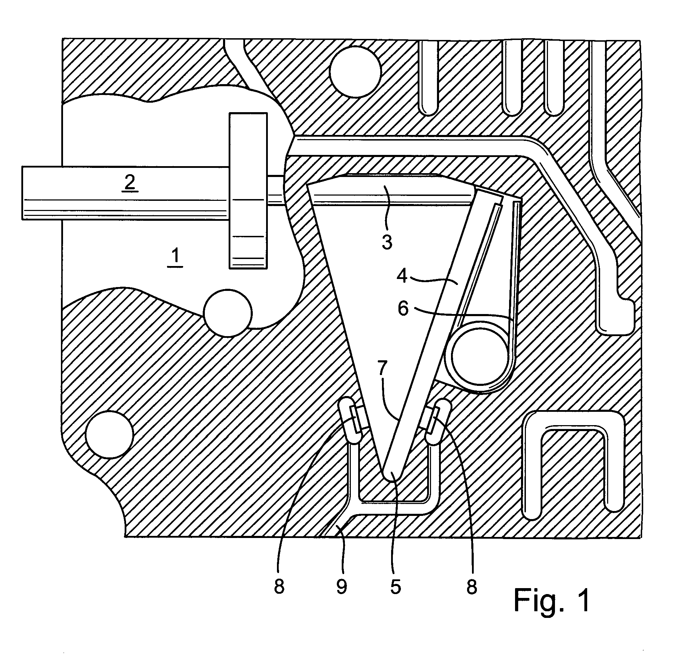

Dabei zeigt
Figur 1 eine schematische Zeichnung einer Vorrichtung zum Erfassen der Stellung eines hydraulischen Kolben-Zylinder-Systems.

Figur 1 zeigt dabei einen Hydraulikzylinder 1 mit einem Kolben 2. Dabei befindet sich der Kolben 2 zumindest teilweise in dem Zylinder 1 und der Weg zwischen dem Kolben 2 und dem Zylinder 1 gibt die Stellung des Zylinder-Kolben-Systems an. Ein Hebel 4 ist an einer Lagerstelle 5 schwenkbar gelagert und wird mittels einer Feder 6 auf den Stößel 3 gedrückt, der wiederum auf den Kolben 2 drückt. Somit wird eine Stellungsveränderung des Kolbens 2 auf den Stößel 3 übergeleitet, der dann den Hebel 4 entweder mit oder gegen die Kraft der Feder 6 bewegt. Zwischen der Angriffsstelle des Stößels 3 an dem Hebel 4 und der Lagerstelle 5 des Hebels ist ein Magnet 7 an dem Hebel 4 angebracht. Zu den beiden Seiten des Magneten 7 sind zwei Hallsensoren 8 stationär relativ zum Zylinder 1 angeordnet. Diese Hallsensoren 8 messen das Magnetfeld des Magneten. Durch die unterschiedliche Position der Hallsensoren kann durch den Vergleich der Hallsensorsignale eine auch über einen großen Temperaturbereich zuverlässige Erfassung der Stellung gewährleistet werden. Die Hallsensorsignale 8 werden dabei über Kabel, die sich in den Kanälen 9 für die Hallsensorkabel befinden an eine oder mehrere Steuerungen oder Rechner weitergegeben.

### Bezugszeichenliste

- 1.: Hydraulikzylinder
- 2.: Kolben
- 1.: Stößel
- 2.: Hebel
- 3.: Lagerstelle
- 4.: Feder
- 5.: Magnet
- 6.: Hall-Sensor
- 7.: Kanal für die Sensorkabel

## Patentansprüche

1. Vorrichtung zum Erfassen der Stellung eines hydraulischen Kolben-Zylinder-Systems wobei das hydraulische Kolben-Zylinder-System mit einem Stellungserfassungsmittel, umfassend einen Magneten und einen Hallsensor, verbunden ist, **dadurch gekennzeichnet, dass** die Verbindung zwischen dem hydraulischen Kolben-Zylinder-System und dem Stellungserfassungsmittel einen Hebel beinhaltet.

2. Vorrichtung nach dem vorhergehenden Anspruch, **dadurch gekennzeichnet, dass** das Stellungserfassungsmittel mindestens zwei Hallsensoren umfasst.

3. Vorrichtung nach einem der vorangehenden Ansprüche, **dadurch gekennzeichnet, dass** der Hebel einen Arm aufweist.

4. Vorrichtung nach einem der Ansprüche 1 und 2 **dadurch gekennzeichnet, dass** der Hebel zwei Arme aufweist.

5. Vorrichtung nach einem der vorangehenden Ansprüche, **dadurch gekennzeichnet, dass** das Kolben-Zylinder-System Teil eines Ventilsystem einer Hydraulik ist.

6. Vorrichtung nach dem vorhergehenden Anspruch, **dadurch gekennzeichnet, dass** das Ventilsystem einer automatisch gesteuerten Kupplung beigeordnet ist.

7. Vorrichtung nach einem der Ansprüche 5 und 6 **dadurch gekennzeichnet, dass** das Ventilsystem einer Doppelkupplungseinrichtung beigeordnet ist.

8. Vorrichtung nach einem der Ansprüche 1 bis 4, **dadurch gekennzeichnet, dass** das hydraulische Kolben-Zylinder-System ein Betätigungselement ist.

9. Vorrichtung nach dem vorangegangenen Anspruch 8 **dadurch gekennzeichnet, dass** das Kolben-Zylindersystem ein Schaltzylinder einer hydraulischen Gangschalteinheit ist.

10. Vorrichtung nach dem vorangegangenen Anspruch 8, **dadurch gekennzeichnet, dass** das Betätigungselement einem stufenlosen Getriebe zugeordnet ist.
